# EUROPÄISCHE PATENTSCHRIFT

(11) **EP 3 937 285 B1**
(45) Veröffentlichungstag und Bekanntmachung des Hinweises auf die Patenterteilung: **04.09.2024**
(21) Anmeldenummer: 21182361.2
(22) Anmeldetag: 29.06.2021
(51) Int. Cl.: H01M 8/04119

(54) **VERFAHREN ZUM BETREIBEN EINES BRENNSTOFFZELLENSYSTEMS IN EINEM SCHIENENFAHRZEUG**
METHOD FOR OPERATING A FUEL CELL SYSTEM IN A TRAIN
PROCÉDÉ DE FONCTIONNEMENT D'UN SYSTÈME DE PILE À COMBUSTIBLE DANS UN VÉHICULE FERROVIAIRE

(30) Priorität: 08.07.2020 DE 102020208571
(43) Veröffentlichungstag der Anmeldung: 12.01.2022
(73) Patentinhaber: Siemens Mobility GmbH, 81739 München (DE)
(72) Erfinder: Antrack, Markus, 01589 Riesa (DE); Peymandar, De-Niang Maria, 41199 Mönchengladbach (DE)
(74) Vertreter: Siemens Patent Attorneys

(56) Entgegenhaltungen:
- EP-B1- 1 175 702
- DE-A1- 102017 214 967
- DE-A1- 102018 212 420

## Beschreibung

Die Erfindung betrifft ein Verfahren zum Betreiben eines Brennstoffzellensystems in einem Schienenfahrzeug, wobei das Brennstoffzellensystem zumindest einen Befeuchter aufweist.

Insbesondere im Regional- und Fernverkehr werden Schienenfahrzeuge vorzugsweise mittels einer Oberleitung oder Stromschiene mit elektrischer Energie versorgt. Es existieren üblicherweise jedoch weiterhin Strecken bzw. Streckenabschnitte des Schienennetzes, welche nicht mit einer solchen Infrastruktur ausgerüstet sind. Beispielsweise sind aktuell in der Bundesrepublik Deutschland lediglich ca. 60% des Schienennetzes elektrifiziert. Auf nicht- oder teilelektrifizierten Strecken bzw. Streckenabschnitten werden daher weiterhin Schienenfahrzeuge eingesetzt, welche die für den Antrieb bzw. die Traktion und den Betrieb von Nebenverbrauchern bzw. so genannten Hilfsbetrieben erforderliche Energie mittels Verbrennungskraftmaschinen generieren.

Um einen im Vergleich zu solchen mit Verbrennungskraftmaschinen betriebenen Schienenfahrzeugen umweltfreundlicheren Betrieb auf solchen Strecken bzw. Streckenabschnitten zu ermöglichen, werden Schienenfahrzeuge zunehmend mit elektrischen Energiespeichern, so genannten Traktionsbatterien, ausgerüstet. Abhängig von einer in den elektrischen Energiespeichern speicherbaren Energiemenge können diese Schienenfahrzeuge eine bestimmte Distanz ohne eine Versorgung über eine Oberleitung zurücklegen. Die Energiespeicher werden bei Befahren elektrifizierter Streckenabschnitte bzw. während eines Halts über eine beispielsweise im Bereich von Haltestellen angeordnete geeignete Ladeinfrastruktur wieder mit elektrischer Energie geladen. Ein Einsatz solcher Energiespeicher eignet sich insbesondere für den Regionalverkehr kürzeren Distanzen zwischen Haltestellen.

Für den Einsatz im weiteren Regionalverkehr sowie Fernverkehr mit üblicherweise größeren Distanzen zwischen Haltestellen ist die Ausrüstung von Schienenfahrzeugen mit elektrischen Energiespeichern hingegen weniger geeignet, da die in diesen speicherbare elektrische Energie zu gering ist bzw. Gewicht und Ausmaße der hierfür erforderlichen Energiespeicher die Kapazität des Schienenfahrzeugs übersteigen würden.

Insbesondere im Fernverkehr wird als Alternative zu Traktionsbatterien der Einsatz von Brennstoffzellen als sinnvoll erachtet. Diese generieren mittels eines elektro-chemischen Prozesses aus einem Brennstoff elektrische Energie, mittels welcher Traktionseinrichtungen und Hilfsbetriebe des Schienenfahrzeugs betrieben werden können. Ergänzend zu der eigentlichen Brennstoffzelle und deren Hilfsbetrieben sind hierfür insbesondere ein Brennstoffspeicher sowie ein elektrischer Energiespeicher erforderlich, wobei der elektrische Energiespeicher eine im Vergleich zu einer Traktionsbatterie deutlich geringere Speicherkapazität aufweisen kann, da dieser vorwiegend der Versorgung der Hilfsbetriebe der Brennstoffzelle, insbesondere während der Inbetriebnahme der Brennstoffzelle, sowie als Pufferspeicher dem Ausgleich kurzzeitiger Lastschwankungen dient.

Als besonders geeignet für den Einsatz in Schienenfahrzeugen wird eine Membran-Brennstoffzelle, bekannt unter den Begriffen Protonenaustauschmembran-Brennstoffzelle (Engl. Proton Exchange Membrane Fuel Cell, PEMFC) bzw. Polymer-Elektrolyt-Brennstoffzelle (Engl. Polymer Electrolyte Fuel Cell, PEFC), angesehen, da diese sowohl schnelle Lastwechsel zulässt als auch mit Lastwechseln verbundene Temperaturschwankungen im Vergleich zu anderen bekannten Brennstoffzellentypen gut kompensieren kann. Nachfolgend wird dieser Brennstoffzellentyp als PEM-Brennstoffzelle bezeichnet. Die Arbeitstemperatur einer PEM-Brennstoffzelle liegt unterhalb von 100°C, typischerweise im Bereich zwischen 60°C und 80°C, weshalb sie der Gruppe der Niedertemperatur-Brennstoffzellen mit Betriebstemperaturen zwischen 60°C und 130°C zugeordnet ist. Brennstoffzellentypen werden nach dem jeweils verwendeten Elektrolyten unterschieden.

DE 10 2018 212420 offenbart zum Beispiel PEM Brennstoffzellen mit einem Befeuchter die in Schienenfahrzeugen verwendet werden.

In einer PEM-Brennstoffzelle übernimmt eine dünne, gasdichte und protonenleitende Kunststofffolie die Funktion des Elektrolyten und wirkt als Separator für die gasförmigen Reaktanten Wasserstoff (als Brenngas) und Sauerstoff (als Oxidationsgas), wobei letzterer der Brennstoffzelle als Bestandteil der Umgebungsluft zugeführt wird. Die zentrale Membran-Elektroden-Einheit (Engl. Membrane Electrode Assembly, MEA) ist das aktive Element der Brennstoffzelle. Diese besteht aus zwei durch den Elektrolyten voneinander getrennten Elektroden, einer Anode und einer Kathode, und ist beidseitig jeweils mit einem Gasverteiler und einem Stromableiter kontaktiert, wobei die Gasverteiler einer Gaszufuhr und Gasabfuhr dienen. Eine PEM-Brennstoffzelle wird durch eine Vielzahl in einem Stapel (Engl. Stack) angeordneter MEA gebildet, die elektrisch in Reihe geschaltet sind, um eine höhere Spannung und damit eine höhere mögliche Leistung der Brennstoffzelle zu erzielen.

Bei Zuführung von Wasserstoff zu der Anode und Sauerstoff zu der Kathode entsteht zwischen den beiden Elektroden eine Potenzialdifferenz. An der Anode oxidiert der Wasserstoff und es entstehen Wasserstoffionen bzw. Protonen, die durch die protonenleitende Membran zu der Kathode wandern. Die Membran stellt für die Elektronen hingegen ein Isolator dar, weshalb diese über einen äußeren Stromkreis, in welchen eine Last geschaltet ist, von der Anode zur Kathode transportiert werden, wodurch der elektrische Stromkreis geschlossen wird. An der Kathode reagieren die Wasserstoffionen mit dem Sauerstoff der Luft und als Reaktionsprodukt entsteht Wasser, auch als Reaktionswasser bzw. Produktwasser bezeichnet.

Eine besondere Herausforderung beim Betrieb einer PEM-Brennstoffzelle stellt das so genannte Wassermanagement dar. Die Protonenleitfähigkeit der Membran ist insbesondere von dem Wassergehalt bzw. von der Feuchte der Membran, welcher bzw. welche von Faktoren wie der Stromdichte, der Feuchte der Reaktanten sowie der Temperatur beeinflusst wird. Eine zu geringe Feuchte der Membran führt zu einer reduzierten Protonenleitfähigkeit und damit zu einer Verringerung der Leistung sowie schließlich zu einer Degradation der Brennstoffzelle. Eine Flutung der Kathode mit Reaktionswasser hingegen kann zu einer Blockierung von Kanälen des kathodenseitigen Gasverteilers führen, wodurch die Funktion der Zelle ebenfalls eingeschränkt wird. Für den effizienten Betrieb der PEM-Brennstoffzelle ist es daher von Bedeutung, dass einerseits ausreichend Wasser in der Zelle verbleibt, andererseits eine exzessive Bildung von Reaktionswasser vermieden wird.

Insbesondere in Brennstoffzellensystemen höherer Leistung, wie sie in Schienenfahrzeugen eingesetzt werden sollen, wird eine ausreichende Feuchte der Membran durch Einsatz zusätzlicher Befeuchter zur Befeuchtung der Reaktanten stromaufwärts der Brennstoffzelle sichergestellt. Für PEM-Brennstoffzellen niedrigerer Leistung ist ein Einsatz zusätzlicher Befeuchter hingegen üblicherweise nicht erforderlich.

Bekannte Befeuchter sind ähnlich einem Wärmetauscher aufgebaut, wobei beispielsweise eine Vielzahl von Röhrchen aus einem Membranmaterial oder eine flächige Membran, insbesondere eine hydrophile Polymermembran, den zu befeuchtenden Reaktanten von einem Befeuchtergas bzw. von Wasser trennt. Unterschieden wird dabei zwischen einem so genannten Gas/Gas-Befeuchter, in welchem ein Befeuchtergas mit einer hohen Feuchte bzw. Wasserdampfkonzentration zur Befeuchtung des Reaktanten dient, und einem so genannten Wasser/Gas-Befeuchter, in welchem durch den Befeuchter zirkulierendes Wasser der Befeuchtung des Reaktanten dient.

In Gas/Gas-Befeuchtern bewirken Ionenkanäle der Membran, dass Wasser aus dem Befeuchtergas gebunden, in Richtung des Partialdruckgefälles transportiert und von dem trockeneren Reaktanten aufgenommen wird. Als Befeuchtergas ist insbesondere das Kathodenabgas der Brennstoffzelle verwendbar, welches aufgrund des kathodenseitig anfallenden Reaktionswassers eine hohe Feuchte aufweist. Vorteilhaft ist dieses einerseits bereits energieneutral in dem Brennstoffzellensystem verfügbar, andererseits wird zusammen mit der Feuchte auch dessen Wärme auf den Reaktanten übertragen.

Die Membranen der Befeuchter sind bei einem Einsatz in Schienenfahrzeugen einerseits hohen mechanischen Belastungen, insbesondere hervorgerufen durch Vibrationen und Stöße, andererseits einer Beladung durch Partikel und anderen Kontaminanten wie beispielsweise Salze, Stickoxide oder Verbundstoffe mit Schwefel oder Ammoniak ausgesetzt, welche trotz dem Befeuchter in der Zuführung vorgeschalteter Luftfilter, insbesondere wenn diese stärker oder vollständig mit Kontaminanten beladen sind, in der zugeführten Luft enthalten sind. Solche Partikel und Kontaminanten führen zu einer Verringerung des Wassertransports durch die Membran und damit zu einer Verringerung der Befeuchtungsleistung des Befeuchters.

Zur Sicherstellung einer effizienten Funktion des einen bzw. der mehreren Befeuchter und damit der Funktion der PEM-Brennstoffzelle während des Betriebs in einem Schienenfahrzeug muss dessen bzw. deren Membran daher regelmäßig gereinigt bzw. bei Beschädigung getauscht werden. Ein solcher Tausch kann auf Basis eines festen Tauschintervalls zwischen 5.000 und 10.000 Betriebsstunden, welches beispielsweise herstellerseitig für bekannte Befeuchter empfohlen wird, erfolgen. Dieses bedeutet jedoch nachteilig, dass über den Einsatzzeitraum eines Schienenfahrzeugs von typischerweise 30 Jahren hohe Betriebskosten bereits für die Aufrechterhaltung der Funktion des bzw. der Befeuchter des Brennstoffzellensystems entstehen.

Aufgabe der Erfindung ist es daher, ein Verfahren zum Betreiben eines Brennstoffzellensystems für ein Schienenfahrzeug anzugeben, welches insbesondere eine Verringerung der Betriebskosten im Zusammenhang mit eingesetzten Befeuchtern ermöglicht. Diese Aufgabe wird durch das Verfahren mit den Merkmalen des unabhängigen Patentanspruchs gelöst. Weiterbildungen der Erfindung sind in abhängigen Patentansprüchen angegeben.

Ein in einem Schienenfahrzeug eingesetztes Brennstoffzellensystem weist zumindest einen PEM-Brennstoffzellenstapel, eine erste Zuführung, welche dazu ausgestaltet ist, Wasserstoff als Brenngas einer Anodenseite des Brennstoffzellenstapels zuzuführen, eine zweite Zuführung, welche dazu ausgestaltet ist, Luft als Oxidationsgas einer Kathodenseite des Brennstoffzellenstapels zuzuführen, sowie zumindest einen Befeuchter, welcher in der zweiten Zuführung angeordnet ist und dazu ausgestaltet ist, dem Brennstoffzellenstapel zugeführte Luft zu befeuchten, auf. Erfindungsgemäß wird eine Reinigung und/oder ein Austausch des zumindest einen Befeuchters abhängig von einem vorgegebenen Alterungsmodell durchgeführt wobei das Alterungsmodell abhängig von Betriebsbedingungen des Schienenfahrzeugs definiert wird.

Erfindungsgemäß wurde erkannt, dass aufgrund einer Durchführung einer Reinigung und/oder eines Austauschs des zumindest einen Befeuchters auf Basis eines Alterungsmodells der PEM-Brennstoffzellenstapel vorteilhaft einerseits mit einer hohen Effizienz bei langer Betriebsdauer betreibbar ist, andererseits Kosten für Ersatz und Arbeitskosten, welche insbesondere aufgrund von eine jeweilige Demontage des Befeuchters erfordernden Sichtprüfungen und Reinigungsarbeiten durch Wartungspersonal entstehen, gegenüber vorgegebenen festen Zeitintervallen vorteilhaft deutlich verringert werden können. Besonders ausgeprägt können diese Vorteile verwirklicht werden, wenn eine die Betriebsbedingungen des Schienenfahrzeugs und damit des Brennstoffzellensystems bekannt sind, sodass das Alterungsmodell entsprechend diesen Bedingungen definiert werden kann.

Ein Alterungsmodell definiert eine erwartete Verringerung der Befeuchtungsleistung des Befeuchters über der Zeit und in Abhängigkeit von den Betriebsbedingungen des Schienenfahrzeugs. Betriebsbedingungen betreffen insbesondere herrschende Umgebungs- bzw. Umweltbedingungen auf der von dem Schienenfahrzeug zu befahrenden Strecke. Umgebungs- bzw. Umweltbedingungen sind beispielsweise Belastungen der Umgebungsluft mit Partikeln sowie bestimmten chemische Verbindungen, welche als Kontaminanten wirkend die Funktion der Befeuchtungsmembran und damit die Befeuchtungsleistung des Befeuchters beeinträchtigen können. Insbesondere sind beispielsweise die Belastungen in Städten und Industrieregionen und jene in Gebieten mit landwirtschaftlicher Nutzung unterschiedlich. Da derartige Belastungen insbesondere temporär auftreten, sollte das Alterungsmodell vorzugsweise auch temporäre Änderungen der Umgebungs- bzw. Umweltbedingungen, insbesondere jahreszeitabhängige Änderungen, berücksichtigen. Weiterhin betreffen die Betriebsbedingungen beispielsweise auf den Befeuchter bzw. auf die Befeuchtungsmembran wirkende mechanische Belastungen, welche mechanische Schädigungen und damit ebenfalls eine Verringerung der Befeuchtungsleistung bewirken können.

Verschiedene Alterungsmodelle können definiert werden, welche jeweils unterschiedliche Betriebsbedingungen berücksichtigen. Entsprechend wird beispielsweise ein Alterungsmodell ausgewählt, welches auf Betriebsbedingungen basierend definiert wurde, die mit denen der von dem Schienenfahrzeug befahrenen Strecke weitgehend übereinstimmen, sodass vorteilhaft Reinigungsarbeiten bzw. ein Austausch des bzw. der in dem Schienenfahrzeug eingesetzten Befeuchter zustandsabhängig durchgeführt werden kann. Sollten während des Betriebs des Schienenfahrzeugs größere Abweichungen des tatsächlichen Zustands von dem gemäß dem Alterungsmodell erwarteten Zustand des zumindest einen Befeuchters festgestellt werden, so kann eine entsprechende Anpassung des Alterungsmodells erfolgen bzw. ein anderes, die Betriebsbedingungen genauer widerspiegelndes Alterungsmodell gewählt werden.

Zur Erzielung der erforderlichen Befeuchtungsleistung können ein einziger oder mehrere Befeuchter vorgesehen sein. Die mehreren Befeuchter können dabei parallel angeordnet sein, wobei durch jeden Befeuchter nur ein Teilstrom der Luft geführt wird und die Teilströme stromabwärts der Befeuchter vorzugsweise wieder zusammengeführt werden, oder seriell angeordnet sein, wobei in jedem der Befeuchter eine Teilbefeuchtung der Luft erfolgt.

Gemäß einer Weiterbildung der Erfindung weist das Brennstoffzellensystem ferner zumindest einen Feuchtesensor auf, welcher ausschließlich temporär in der zweiten Zuführung stromabwärts des zumindest einen Befeuchters angeordnet wird, wobei mittels des zumindest einen Feuchtesensors eine Feuchte der dem Brennstoffzellenstapel zugeführten Luft bestimmt wird.

Das Brennstoffzellensystem in dem Schienenfahrzeug sieht bewusst von einer aktiven Steuerung des Befeuchtungsgrads der dem Brennstoffzellenstapel zugeführten Luft ab, wie sie insbesondere in Kraftfahrzeugen mit einer Brennstoffzelle eingesetzt wird. In diesen wird mittels einer parallel zum Befeuchter angeordneten Bypass-Leitung, einem steuerbaren Bypass-Ventil sowie einem Feuchtesensor die Feuchte des kathodenseitigen Reaktanten gesteuert. Die vorteilhafte Wirkung einer solchen Steuerung, insbesondere bei Anordnung des Befeuchters entfernt von dem Brennstoffzellenstapel, konnte bislang nicht nachgewiesen werden, zudem stellen die genannten zusätzlichen Komponenten wiederum jeweils potenzielle Fehlerquellen für die Funktion des Brennstoffzellensystems dar. Der zumindest eine Befeuchter des Brennstoffzellensystems, in welchem das erfindungsgemäße Verfahren Anwendung findet, ist bezüglich der Befeuchtungsleistung beispielsweise derart dimensioniert, dass die Feuchte des kathodenseitigen Reaktanten im Bereich zwischen 80% und 95% liegt. Die Möglichkeit eines Ausgleichs einer über die Zeit geringer werdenden Befeuchtungsleistung des Befeuchters durch Ansteuerung eines Bypass-Ventils ist in dem Brennstoffzellensystem somit nicht vorgesehen.

Erfindungsgemäß wird der zumindest eine Feuchtesensor ausschließlich temporär in der zweiten Zuführung angeordnet, um eine aktuelle Feuchte der dem Brennstoffzellenstapel kathodenseitig zugeführten Luft zu bestimmen. Diese temporäre Anordnung und Bestimmung erfolgt beispielsweise während einer Außerbetriebsetzung des Schienenfahrzeugs, also während das Schienenfahrzeug nicht für den Personen- oder Gütertransport eingesetzt wird. Eine solche Außerbetriebsetzung erfolgt beispielsweise regelmäßig zur Wartung weiterer Komponenten und Einrichtungen des Schienenfahrzeugs sowie insbesondere zu Reinigungszwecken. Für die Bestimmung der Feuchte der zugeführten Luft mittels des zumindest einen Feuchtesensors ohne Demontage des zumindest einen Befeuchters ist ein Betrieb des Brennstoffzellensystems des Schienenfahrzeugs erforderlich.

Hierzu wird der Feuchtesensor an einer für dessen Montage vorgesehenen Stelle der zweiten Zuführung von Wartungspersonal montiert. Hierfür kann beispielsweise eine verschließbare Öffnung in der zweiten Zuführungen vorgesehen sein, welche während des normalen Betriebs des Schienenfahrzeugs verschlossen ist, während Wartungsarbeiten jedoch von Wartungspersonal geöffnet werden kann, um einen Feuchtesensor in die zweite Zuführung zur Durchführung von Messungen einzuführen. Vorzugsweise weist der zumindest eine Feuchtesensor ergänzend einen Temperatursensor auf bzw. ist mit diesem in einem gemeinsamen Gehäuse angeordnet, wobei ein Temperatursensor auch getrennt von dem Feuchtesensor in der zweiten Zuführung angeordnet werden kann.

Der Feuchtesensor ist beispielsweise mit einer Auswerteeinrichtung, insbesondere einem geeigneten elektronischen Handgerät des Wartungspersonals, einer Steuereinrichtung des Brennstoffzellensystems oder einer Steuereinrichtung des Schienenfahrzeugs kommunikationstechnisch verbunden. Eine Auswerteeinrichtung dient insbesondere dazu, basierend auf den von dem Feuchtesensor sowie insbesondere dem Temperatursensor bereitgestellten Informationen eine aktuelle Befeuchtungsleistung des Befeuchters zu bestimmen. Die bestimmte Befeuchtungsleistung wird von der Auswerteeinrichtung anschließend mit einer für den Zeitpunkt der Bestimmung erwarteten Befeuchtungsleistung gemäß dem Alterungsmodells verglichen, welches beispielsweise in einem Speicherbereich der Auswerteeinrichtung hinterlegt ist.

Sofern dieser Vergleich ergibt, dass die bestimmte Befeuchtungsleistung der erwarteten entspricht bzw. innerhalb eines vorgegebenen Toleranzbands um die erwartete Befeuchtungsleistung liegt, erfolgt beispielsweise eine Ausgabe einer entsprechenden Information über den Zustand des Befeuchters an das Wartungspersonal durch die Auswerteeinrichtung. Ergibt der Vergleich hingegen, dass die bestimmte Befeuchtungsleistung außerhalb des Toleranzbandes liegt, kann ein entsprechender Hinweis auf eine erforderliche Anpassung des Zeitpunkts einer nächsten Reinigung des Befeuchters bzw. eines Austausches von der Auswerteeinrichtung oder einer mit dieser verbundenen optischen und/oder akustischen Ausgabeeinrichtung ausgegeben werden. Insbesondere wenn die bestimmte Befeuchtungsleistung die erwartete Befeuchtungsleistung übersteigt, kann eine Reinigung bzw. ein erforderlicher Austausch des Befeuchters vorteilhaft erst zu einem späteren Zeitpunkt als nach dem Alterungsmodell vorgesehen erfolgen. In gleicher Weise kann, wenn die bestimmte Befeuchtungsleistung die erwartete Befeuchtungsleistung unterschreitet, der entsprechende Hinweis das Wartungspersonal beispielsweise zunächst dazu veranlassen, eine Sichtprüfung des Befeuchters vorzunehmen, um bei Feststellung einer mechanischen Beschädigung oder einer starken Beladung des Membranmaterials einen sofortigen Austausch vorzunehmen oder einen Zeitpunkt einer nachfolgenden Sichtprüfung bzw. eines erforderlichen Austauschs manuell anpassen zu können.

Zur Bestimmung der Befeuchtungsleistung kann ein weiterer Feuchtesensor, welcher von Wartungspersonal an einer für dessen Montage vorgesehenen Stelle stromaufwärts des Befeuchters in der zweiten Zuführung montiert wird, ergänzend vorgesehen werden. Aus den von den beiden Feuchtesensoren jeweils bereitgestellten Informationen kann eine Differenz der Feuchten und daraus eine Befeuchtungsleistung durch die Auswerteeinrichtung bestimmt werden kann.

Sofern in der zweiten Zuführung des Brennstoffzellensystems mehrere Befeuchter vorgesehen sind, wird vorzugsweise die Befeuchtungsleistung jedes einzelnen der Befeuchter bestimmt. Bei einer Parallelschaltung der mehreren Befeuchter wird der Feuchtesensor wiederum an einer für dessen Montage vorgesehenen Stelle der zweiten Zuführung von Wartungspersonal montiert. Die für die Montage des Feuchtesensors vorgesehene Stelle sollte dabei stromaufwärts einer Zusammenführung der parallelen Zweige in eine gemeinsame zweite Zuführung angeordnet sein, um die Befeuchtungsleistung des betrachteten Befeuchters unabhängig von den weiteren Befeuchtern bestimmen zu können. Bei einer Serienschaltung wird hingegen ein jeweiliger Feuchtesensor stromaufwärts und stromabwärts des betrachteten Befeuchters an einer jeweils vorgesehenen Stelle der zweiten Zuführung montiert. Mittels der zwei dem Befeuchter vor- und nachgeschalteten Feuchtesensoren kann eine Differenz der Feuchten und daraus die Befeuchtungsleistung des betrachteten Befeuchters bestimmt werden. Alternativ kann die jeweilige Befeuchtungsleistung auch bei einer Serienschaltung mittels lediglich eines Feuchtesensors bestimmt werden, wenn beginnend mit dem in Strömungsrichtung der zugeführten Luft ersten Befeuchter eine jeweilige Differenz zu der Feuchte der Umgebungsluft bzw. der Abluft des jeweils vorgeschalteten Befeuchters bestimmt wird. Sowohl bei einer parallelen als auch einer seriellen Anordnung mehrerer Befeuchter in der zweiten Zuführung kann die Bestimmung der jeweiligen Befeuchtungsleistung sequenziell oder parallel erfolgen, wobei eine sequenzielle Bestimmung vorteilhaft nur einen bzw. Feuchtesensor bzw. zwei Feuchtesensoren bei einer Differenzbestimmung erfordert.

Die für die Bestimmung des aktuellen Zustands des Befeuchters verwendete Auswerteeinrichtung kann, wie vorstehend bereits genannt, als Teil einer Steuereinrichtung verwirklicht sein, welche einer Steuerung von insbesondere steuerbaren Komponenten und Hilfsbetriebe des Brennstoffzellensystems dient. Alternativ kann die Auswerteeinrichtung jedoch auch unabhängig von dem Brennstoffzellensystem verwirklicht, mit dieser jedoch kommunikationstechnisch verbunden sein. Den bestimmten Zustand des Befeuchters repräsentierende Informationen können wiederum einer übergeordneten Überwachungseinrichtung auf Ebene des Fahrzeugs zugeführt werden, in welcher insbesondere alle den jeweiligen Zustand der verschiedenen Komponenten des Brennstoffzellensystems bzw. des Schienenfahrzeugs repräsentierenden Informationen zusammengeführt werden. Die aggregierten Informationen können von der übergeordneten Einrichtung dann als Basis für die Planung und Durchführung erforderlichen Wartungsarbeiten durch Wartungspersonal insbesondere an dem Brennstoffzellensystem dienen. Die übergeordnete Überwachungseinrichtung kann alternativ oder ergänzend auch außerhalb des Schienenfahrzeugs vorgesehen sein, welche über geeignete Kommunikationsschnittstellen mit dem Schienenfahrzeug verbunden ist.

Gemäß einer weiteren Weiterbildung der Erfindung weist das Brennstoffzellensystem ferner eine erste Abführung, welche ausgestaltet ist, ein Anodenabgas abzuführen, sowie eine zweite Abführung, welche ausgestaltet ist, ein Kathodenabgas abzuführen, auf. Der zumindest eine Befeuchter ist dabei ebenfalls in der zweiten Abführung angeordnet, wobei die zugeführte Luft mittels des Kathodenabgases in dem Befeuchter befeuchtet wir.

Der zumindest eine Befeuchter ist entsprechend den einleitenden Erläuterungen beispielsweise als ein Gas/GasBefeuchter verwirklicht, mittels welchem in dem eine höhere Feuchte als die zugeführte Luft führendes Kathodengas zur Befeuchtung der Luft verwendet wird.

Einer weiteren Weiterbildung der Erfindung wird das Alterungsmodell abhängig von Umgebungs- und Umweltbedingungen einer von dem Schienenfahrzeug befahrenen Strecke, definiert.

Wie vorstehend bereits beschrieben, können durch Verwendung eines existierende Betriebsbedingungen des Schienenfahrzeugs berücksichtigenden Alterungsmodells vorteilhaft insbesondere Kosten für eine Reinigung und/oder einen Austausch des zumindest einen Befeuchters verringert werden sowie ein effizienter Betrieb des Brennstoffzellensystems bei langer Betriebsbereitschaft sichergestellt werden.

Ausführungsbeispiele der Erfindung werden nachfolgend unter Bezugnahme auf Figuren beschrieben. Dabei zeigen:
- FIG 1: ein Schienenfahrzeug,
- FIG 2: ein Brennstoffzellensystem mit einem kathodenseitigen Befeuchter sowie Feuchtesensoren, und
- FIG 3: ein Brennstoffzellensystem mit drei kathodenseitig parallel geschalteten Befeuchtern sowie einem Feuchtesensor.

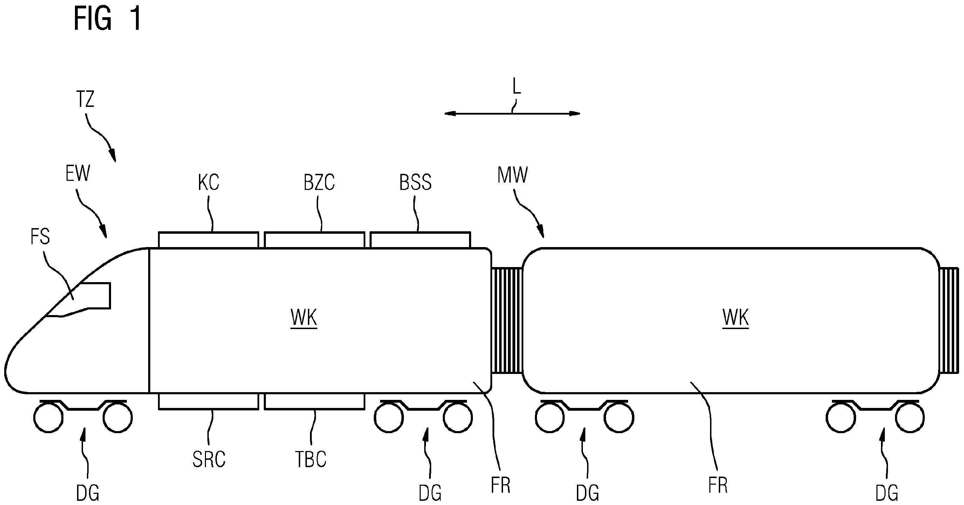

FIG 1 zeigt eine schematische Seitenansicht eines Schienenfahrzeugs, welches beispielsweise als ein Triebzug TZ mit einer Mehrzahl Wagen für die Personenbeförderung ausgestaltet ist, wobei lediglich ein erster Wagen in Form eines Endwagens EW sowie ein mit diesem gekuppelter zweiter Wagen in Form eines Mittelwagens MW beispielhaft dargestellt sind. Abhängig von der gewünschten Anzahl beförderbarer Personen weist ein Triebzug üblicherweise zwei Endwagen sowie eine Anzahl Mittelwagen auf. In einer Mindestkonfiguration kann ein Triebzug jedoch auch aus lediglich zwei Endwagen bestehen. Alternativ kann das Schienenfahrzeug jedoch in gleicher Weise als ein Triebwagen oder eine Lokomotive ausgestaltet sein. Die in der FIG 1 dargestellten Endwagen EW und Mittelwagen MW verfügen über einen jeweiligen Wagenkasten WK, der sich über jeweils zwei Drehgestelle DG in Form von Trieb- oder Laufdrehgestellen auf nicht dargestellten Schienen der zu befahrenden Strecke abstützt. Alternativ zu der angegebenen Anordnung von Drehgestellen können sich das hintere, rechte Ende des Endwagens EW und das vordere, linke Ende des Mittelwagens MW auch auf einem gemeinsamen Drehgestell, insbesondere auf einem so genannten Jakobs-Drehgestell, abstützen. Der Endwagen EW ist bezüglich der Längsachse L bzw. horizontalen Achse beispielhaft in mehrere räumliche Bereiche unterteilt. Diese Bereiche sind zum einen ein Führerstand FS im vorderen Bereich, zum anderen ein an den Führerstand FS angrenzender Fahrgastraum FR. Der Mittelwagen MW weist hingegen ausschließlich einen Fahrgastraum FR auf. Die Fahrgasträume FR der Wagen EW, MW können von Fahrgästen über in Seitenwänden des jeweiligen Wagenkastens WK angeordnete, nicht dargestellte Türen betreten und verlassen werden. Weiterhin können Fahrgäste über einen Wagenübergang in den Fahrgastraum eines jeweils benachbarten Wagens gelangen.

Auf dem Dach sowie unter dem Boden bzw. im Unterflurbereich des Wagenkastens WK des Endwagens EW sind beispielhaft mehrere Container für Komponenten und elektrische Geräte als Bestandteile der elektrischen Ausrüstung des Triebzugs TZ angeordnet. Diese dienen beispielsweise sowohl der Energieerzeugung als auch dem Antrieb bzw. der Traktion sowie diversen Hilfsbetrieben des Triebzugs TZ.

Der beispielhafte Triebzug TZ ist für einen Betrieb auf nicht oder nur teilelektrifizierten Strecken des Schienennetzes vorbereitet. Aus diesem Grund verfügt der Triebzug TZ nicht über einen mit einer netzseitigen Oberleitung verbindbaren Stromabnehmer, über welchen dem Triebzug TZ elektrische Energie für dessen Betrieb zugeführt werden kann. Vielmehr wird die für den Betrieb des Triebzugs TZ erforderliche elektrische Energie mittels eines auf dem Fahrzeug angeordneten Brennstoffzellensystems BZS generiert. Mechanische und elektrische Hauptkomponenten des Brennstoffzellensystems BZS, insbesondere ein PEM-Brennstoffzellenstapel, ein Verdichter, Luftfilter sowie ein oder mehrere Befeuchter, sind nach dem Beispiel der FIG 1 in einem Brennstoffzellencontainer BZC auf dem Dach des Endwagens EW des Triebzugs TZ angeordnet. Der für den Betrieb des Brennstoffzellensystems BZS erforderliche Brennstoff, beispielsweise Wasserstoff, ist in einem Brennstoffspeicher BSS gelagert, welcher beispielhafte ebenfalls auf dem Dach des Endwagens EW angeordnet und über geeignete Leitungen bzw. Rohre fluidtechnisch mit dem Brennstoffzellencontainer verbunden ist. Ergänzend ist auf dem Dach des Endwagens EW ein Klimatisierungscontainer KC angeordnet, in welchem beispielsweise sowohl elektrische und mechanische Komponenten für die Klimatisierung des Fahrgastraums FR des Endwagens EW als auch Komponenten insbesondere für eine Temperierung von Komponenten des Brennstoffzellensystems BZS untergebracht sind.

Im Unterflurbereich des Endwagens EW ist hingegen ein Traktionsbatteriecontainer TBC für eine von dem Brennstoffzellensystem BZS über einen Gleichspannungssteller speisbare Traktionsbatterie vorgesehen. Ferner ist im Unterflurbereich des Endwagens EW beispielhaft ein Stromrichtercontainer SRC für einen Traktionsstromrichter vorgesehen, welcher insbesondere mit der Traktionsbatterie verbunden ist und Fahrmotoren mit elektrischer Energie versorgt. Die Fahrmotoren sind beispielsweise in den als Triebdrehgestelle ausgestalteten Drehgestellen DG des Endwagens EW angeordnet, wobei in weiteren Drehgestellen des Triebzugs TZ, insbesondere abhängig von der benötigten maximalen Antriebsleistung, weitere Fahrmotoren angeordnet sein können.

Neben den aufgeführten Containern und darin angeordneten Systemen und Komponenten können weitere, nicht speziell dargestellte jedoch für den Betrieb des Triebzugs erforderliche Komponenten und Einrichtungen, insbesondere Einrichtungen zur Steuerung der diversen Systeme und Komponenten, in oder an dem Wagenkasten WK des Endwagens EW vorgesehen sein. Auch ist eine Verteilung der verschiedenen Container und Komponenten auf mehrere Wagen des Triebzugs TZ möglich, insbesondere um vorgegebene maximale Radlasten nicht zu überschreiten. Ebenfalls können die aufgeführten Container, Systeme und Komponenten jeweils mehrfach in dem Triebzug TZ vorgesehen sein, insbesondere um die generierbare elektrische Energie und damit mögliche Traktionsleistung zu erhöhen.

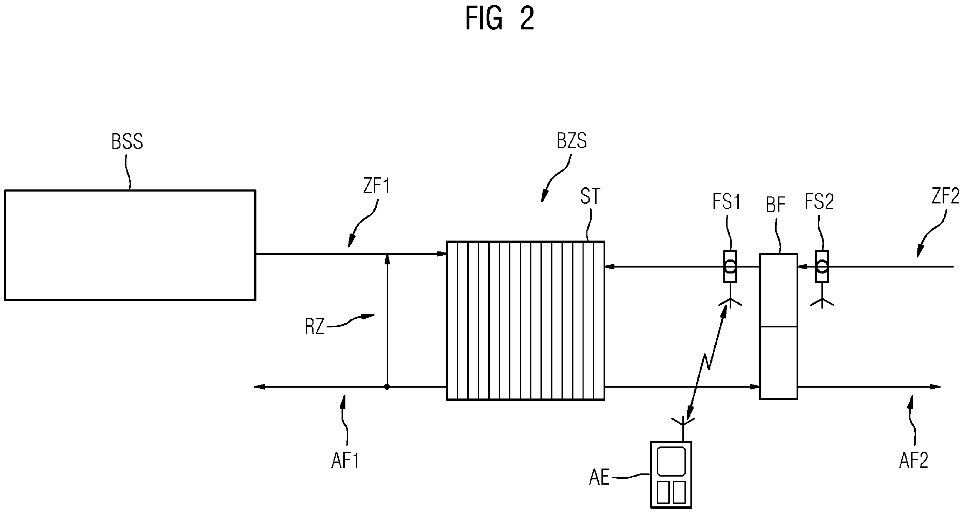

FIG 2 zeigt schematisch ein beispielhaftes Brennstoffzellensystem BZS für den Triebzug TZ der FIG 1, welches ausgestaltet ist, das erfindungsgemäße Verfahren umzusetzen. Dabei sind zur Vereinfachung der Darstellung nicht alle für den Betrieb des Brennstoffzellensystems BZS erforderlichen mechanischen und elektrischen Komponenten dargestellt. Das Brennstoffzellensystem BZS umfasst als zentrale Komponente eine PEM-Brennstoffzelle mit einer Vielzahl in einem Stapel ST angeordneter und elektrisch in Reihe geschalteten Membran-Elektroden-Einheiten. Eine von dem Brennstoffzellensystem BZS generierbare Leistung kann beispielsweise im Bereich von mehreren hundert Kilowatt liegen.

Dem Brennstoffzellenstapel ST werden die beiden für den elektro-chemischen Prozess erforderlichen Reaktanten Wasserstoff sowie Sauerstoff zugeführt. Die Anodenseite des Brennstoffzellenstapels ST ist hierfür über eine erste Zuführung ZF1 mit dem Brennstoffspeicher BSS verbunden. Ein in dieser ersten Zuführung ZF1 angeordnetes, nicht dargestelltes, Druckregelventil dient dabei der Einstellung eines gewünschten Drucks des gasförmigen Wasserstoffs. Die Zufuhr des Wasserstoffs erfolgt überstöchiometrisch, dem Brennstoffzellenstapel ST wird also mehr Wasserstoff zugeführt als dieser verbraucht. Der während des Prozesses nicht verbrauchte Wasserstoff wird als Anodenabgas der ersten Zuführung ZF1 über eine erste Abführung AF1 abgeführt bzw. über einen die erste Zuführung ZF1 und die erste Abführung AF1 verbindenden Rezirkulationszweig RZ wieder zugeführt und mit nachströmenden Wasserstoff vermischt. Weitere nicht dargestellte Komponenten wie insbesondere ein Wasserabscheider zum Abscheiden von in das Anodenabgas gelangendem Reaktionswasser, ein so genanntes Purge-Ventil zum Ablassen von Stickstoff sowie ein Druckablassventil für einen Schutz der Brennstoffzelle vor Überdruck können ebenfalls auf der Anodenseite des Brennstoffzellensystems BZS vorgesehen sein.

Der Kathodenseite des Brennstoffzellenstapels ST wird hingegen sauerstoffhaltige Umgebungsluft über eine zweite Zuführung ZF2 zugeführt. Die Luft wird hierfür über einen in der zweiten Zuführung ZF2 angeordneten elektrisch betriebenen Luftverdichter aus der Umgebung des Triebzugs TZ angesaugt und mittels eines oder mehrerer nachgeschalteter Luftfilter von Partikeln und chemischen Verbindungen, welche die Membranen des Brennstoffzellenstapels ST beschädigen bzw. deren Funktion beeinträchtigen können, befreit. Luftverdichter und Luftfilter sind wiederum nicht gesondert dargestellt. Die Zufuhr des Sauerstoffs erfolgt ebenfalls überstöchiometrisch, dem Brennstoffzellenstapel ST wird also auch mehr Sauerstoff zugeführt als dieser verbraucht. Das Kathodenabgas wird über eine zweite Abführung AF2 an die Umgebung abgeführt.

Weiterhin ist in der zweiten Zuführung ZF2 ein Befeuchter BF stromabwärts des einen bzw. der mehreren Luftfilter angeordnet. Wie vorstehend bereits ausgeführt, dient die Befeuchtung der Luft der Vermeidung eines Austrocknens der Membranen des Brennstoffzellenstapels. In dem beispielhaften Brennstoffzellensystem BZS der FIG 2 ist der Befeuchter BF als ein Gas/Gas-Befeuchter ausgestaltet und ebenfalls in der zweiten Abführung AF2 stromabwärts des Brennstoffzellenstapels ST angeordnet. Das aufgrund des in dem Brennstoffzellenstapel ZF vorhandenen, während des elektro-chemischen Prozesses entstehenden Reaktionswassers feuchte Kathodenabgas bewirkt in dem Befeuchter BF eine Befeuchtung der durchströmenden gereinigten Luft. Der Befeuchter BF kann beispielsweise als Gleichstrom- oder Gegenstrom-Befeuchter ausgestaltet sein. Für eine Steuerung des Luftmassenstroms kann ergänzend ein Druckventil beispielsweise in der zweiten Zuführung ZF2 bzw. der zweiten Abführung AF2 vorgesehen sein, welches ebenfalls nicht dargestellt ist.

Wie einleitend bereits ausgeführt, unterliegt insbesondere der Befeuchter während des Fahrbetriebs des Schienenfahrzeugs einerseits hohen mechanischen Belastungen, welche insbesondere durch Vibrationen und Stöße hervorgerufen werden, andererseits einer Beladung der die Luftströme trennenden Membran durch Partikel und andere Kontaminanten, welche mit ebenfalls steigender Beladung des bzw. der vorgeschalteter Luftfilter in der zugeführten Luft enthalten sind. Sowohl mechanische Beschädigungen als auch eine Beladung durch Partikel und andere Kontaminanten führen zu einer Verringerung der Kapazität der Membran, Wasser dem Kathodenabgas zu entziehen und der trockeneren Zuluft zuzuführen, und damit zu einer Abnahme der Befeuchtungsleistung des Befeuchters BF. Da eine verringerte Befeuchtungsleistung direkte Auswirkungen sowohl auf die generierbare Leistung des Brennstoffzellensystems als auch speziell auf die Haltbarkeit der in dem Brennstoffzellenstapel ST eingesetzten Membranen hat, muss eine möglichst konstant hohe Befeuchtungsleistung des Befeuchters BF während des Betriebs des Brennstoffzellensystems BZS sichergestellt werden.

Im Unterschied zu einem festen Reinigungs- und/oder Tauschintervall für den Befeuchter BF des Brennstoffzellensystems BZS, wie es aktuell von dem Hersteller des Befeuchters vorgegeben wird, erfolgt erfindungsgemäß eine zustandsabhängige Reinigung bzw. ein zustandsabhängiger Tausch des Befeuchters BF bzw. der darin angeordneten Membran, sofern diese separat getauscht werden kann. Die zustandsabhängige Reinigung bzw. der Tausch erfolgt dabei auf Basis eines vorgegebenen Alterungsmodells, welches aus einer Mehrzahl für unterschiedliche Einsatzbedingungen des Schienenfahrzeugs definierter Alterungsmodelle gewählt wird. Entsprechend dem ausgewählten vorgegebenen Alterungsmodell wird von Wartungspersonal eine Reinigung insbesondere der Membran bzw. ein vollständiger Austausch des Befeuchters BF vorgenommen. Eine solche Tätigkeit erfordert einen direkten Zugriff auf den Befeuchter BF, welcher nach der vorstehenden Beschreibung zu der FIG 1 als Teil der hauptsächlichen Komponenten des Brennstoffzellensystems BZS in dem Brennstoffzellencontainer BZC auf dem Dach des Endwagens EW des Triebzugs TZ angeordnet ist. Die Reinigung bzw. der Austausch an diesem schwer zugänglichen Bereich des Triebzugs TZ bedeutet somit einen großen Arbeitsaufwand für das Wartungspersonal, gleichzeitig stellt ein Austausch des Befeuchters einen über die Betriebsdauer des Schienenfahrzeugs von typischerweise 30 Jahren gesehen bedeutenden Kostenfaktor dar. Durch Wahl eines Alterungsmodells, welches die realen Betriebsbedingungen des Brennstoffzellensystems BZS möglichst genau widerspiegelt, kann somit eine deutliche Kostenersparnis gegenüber fest vorgegebenen Intervallen erzielt werden.

Die Qualität der Abbildung der tatsächlichen Verringerung der Befeuchtungsleistung durch das Alterungsmodell sollte vorzugsweise jedoch regelmäßig überprüft werden, um eine Anpassung, beispielsweise des Termins der nächsten Wartung des Brennstoffzellensystems BZS, bei welchen auch eine Reinigung oder ein Austausch des Befeuchters erfolgen soll, vorzunehmen oder ein geeigneteres Alterungsmodell für den Befeuchter BF auszuwählen. Für eine solche Prüfung ist in der zweiten Zuführung ZF2 stromabwärts des Befeuchters BF eine verschließbare Öffnung VOE vorgesehen, in welcher ein erster Feuchtesensor FS1 temporär angeordnet werden kann. Beispielsweise kann die verschließbare Öffnung ein Gewinde oder einen Bajonettverschluss aufweisen, welches mit einem entsprechenden Gewinde bzw. Verschluss des ersten Feuchtesensors FS1 kompatibel ist. Vorzugsweise ist die verschließbare Öffnung derart für Wartungspersonal zugänglich, dass der Brennstoffzellencontainer BZC nicht vollständig geöffnet werden muss, sodass eine schnelle Montage und Demontage des Feuchtesensors FS1 möglich ist. Beispielsweise kann hierfür eine leicht zugängliche verschließbare Wartungsklappe in dem Brennstoffzellencontainer BZC vorgesehen sein.

Der erste Feuchtesensor FS1 ist dazu ausgestaltet, eine Feuchte der aus dem Befeuchter BF strömenden Luft zu bestimmen. Da die Feuchte der Luft insbesondere von der Temperatur abhängig ist, weist der erste Feuchtesensors FS1 vorzugsweise ergänzend einen Temperatursensor auf, um ebenfalls die Temperatur der Luft, insbesondere die tatsächliche Prozesstemperatur, zu bestimmen. Sofern Feuchtesensor und Temperatursensor nicht in einem gemeinsamen Gehäuse verwirklicht sind, kann für den Temperatursensor eine entsprechende weitere verschließbare Öffnung in der zweiten Zuführung ZF2, vorzugsweise nahe der verschließbaren Öffnung für den Feuchtesensor, vorgesehen sein. Der Feuchtesensor weist beispielsweise eine Dünnfilm-Polymer-Sensorik auf und ist vorzugsweise beheizbar ausgeführt. Eine Beheizbarkeit des Feuchtesensors ist speziell in einer Umgebung mit hoher Feuchte, insbesondere bei über 80% relativer Feuchte, sinnvoll, da in einer solchen Umgebung eine Kondensation zu einer Sättigung des Feuchtesensors führen kann. Durch Erwärmung des Feuchtesensors auf einen Wert oberhalb der Umgebungstemperatur wird die relative Feuchte auf ein Niveau unterhalb der Kondensation reduziert. Aus der mittels der Sensoren bestimmten Feuchte und Temperatur ist eine relative Feuchte der Luft bestimmbar.

Sofern die zweite Zuführung ZF2 ausschließlich Umgebungsluft führt, kann die Befeuchtungsleistung des Befeuchters BF anhand der bestimmten Feuchte und in Kenntnis der Feuchte der Umgebungsluft bestimmt werden. Sofern eine Rückführung insbesondere eines Teils des Kathodenabgases in die zweite Zuführung ZF2 über einen Rezirkulationszweig, welcher in der zweiten Zuführung ZF2 stromaufwärts des Befeuchters BF und in der zweiten Abführung AF2 stromabwärts des Befeuchters BF angeordnet ist, erfolgt, sollte hingegen eine weitere verschließbare Öffnung in der zweiten Zuführung ZF2 stromabwärts des Rezirkulationszweigs vorgesehen sein, um in dieser einen zweiten Feuchtesensor FS2 ebenfalls temporär anzuordnen, wie es beispielhaft in der FIG 2 dargestellt ist. Auf Basis der jeweils bestimmten Feuchte des ersten und des zweiten Feuchtesensors FS1 bzw. FS2 kann schließlich die Befeuchtungsleistung des Befeuchters BF bestimmt werden.

Zur Erfassung der Befeuchtungsleistung des Befeuchters BF werden von Wartungspersonal der erste Feuchtesensor FS1 sowie gegebenenfalls ein Temperatursensor sowie ein zweiter Feuchtesensors FS2 an den vorgesehenen verschließbaren Öffnungen der zweiten Zuführung montiert. Die Durchführung der Messungen mittels der montierten Sensoren erfolgt anschließend bei Betrieb des Brennstoffzellensystems und vorzugsweise über einen vorgegebenen Zeitraum, welcher derart definiert ist, dass eine Bestimmung der Befeuchtungsleistung des Befeuchters BF möglich ist. Nach dem Beispiel der FIG 2 werden die Messungen des ersten Feuchtesensors FS1 sowie, sofern vorhanden, des zweiten Feuchtesensors FS2 sowie des Temperatursensors bzw. diese Messungen jeweils repräsentierende Informationen während des Zeitraums über eine Funkschnittstelle von den Sensoren zu einer Auswerteeinrichtung AE übertragen. Diese Auswerteeinrichtung AE kann beispielsweise ein elektronisches Handgerät sein, welches dem Wartungspersonal für die Durchführung der Wartung speziell des Brennstoffzellensystems BZS bzw. des Schienenfahrzeugs allgemein erforderliche Informationen bereitstellt. Ein solches beispielhaftes Handgerät weist neben einer Funkschnittstelle eine optische Ausgabeeinheit in Form eines Bildschirms sowie zumindest einen elektronischen Prozessor sowie einen Datenspeicher auf. Der Prozessor dient dabei insbesondere einer Auswertung der dem einen oder den mehreren Sensoren bereitgestellten Informationen, um aus diesen eine Befeuchtungsleistung und damit einen aktuellen Zustand des Befeuchters BF abzuleiten.

Die aus den bereitgestellten Informationen bestimmte Befeuchtungsleistung kann mit der erwarteten Befeuchtungsleistung gemäß dem zugeordneten und in dem Datenspeicher der Auswerteeinrichtung AE vorgehaltenen Alterungsmodell verglichen werden. Die jeweiligen Befeuchtungsleistungen können dem Wartungspersonal über die optische Ausgabeeinheit angezeigt werden. Alternativ kann jedoch in der Auswerteeinrichtung AE beispielsweise eine Differenz zwischen der bestimmten und der nach dem Alterungsmodell erwarteten Befeuchtungsleistung bestimmt und mit einem vorgegebenen Schwellwert verglichen werden. Abhängig von dem Ergebnis des Vergleichs kann über die optische Ausgabeeinheit eine Information darüber ausgegeben werden, ob der aktuell bestimmte Zustand des Befeuchters einem nach dem Alterungsmodell erwarteten Zustand, einem schlechteren oder sogar einem besseren Zustand entspricht. Basierend auf dieser Information kann das Wartungspersonal dann weitere Tätigkeiten, bei einem schlechteren Zustand beispielsweise eine Reinigung oder einen Austausch des Befeuchters durchführen, bei einem besseren Zustand beispielsweise eine Anpassung des Zeitpunktes einer nächsten Zustandsbestimmung vornehmen.

Alternativ zu der beispielhaften Übertragung von Informationen zwischen Sensoren und der Auswerteeinrichtung AE über eine Funkschnittstelle kann eine Informationsübertragung ebenfalls kabelgebunden erfolgen. Weiterhin können die Sensoren alternativ ebenso über einen Datenspeicher verfügen, in welchem während des Zeitraums der Messungen generierte Informationen gespeichert werden. Diese gespeicherten Informationen können nach Abschluss der Messungen an die Auswerterichtung AE übertragen und in dieser wiederum entsprechend der vorstehenden Beschreibung ausgewertet werden. Ebenso kann die Auswerteeinrichtung AE alternativ als eine stationäre Einrichtung ausgestaltet sein, welche beispielsweise einer zentralen Erfassung und Bewertung des Zustands verschiedener Systeme und Komponenten des Schienenfahrzeugs dient, um auf diesen basierend erforderliche Wartungstätigkeiten an dem Fahrzeug zu koordinieren. Auch kann die Auswerteeinrichtung AE als Teil einer Steuerungseinrichtung des Brennstoffzellensystems BZS ausgestaltet sein, welche neben der Steuerung auch einer zentralen Erfassung der Zustände zumindest eines Teils der Komponenten des Brennstoffzellensystems dient.

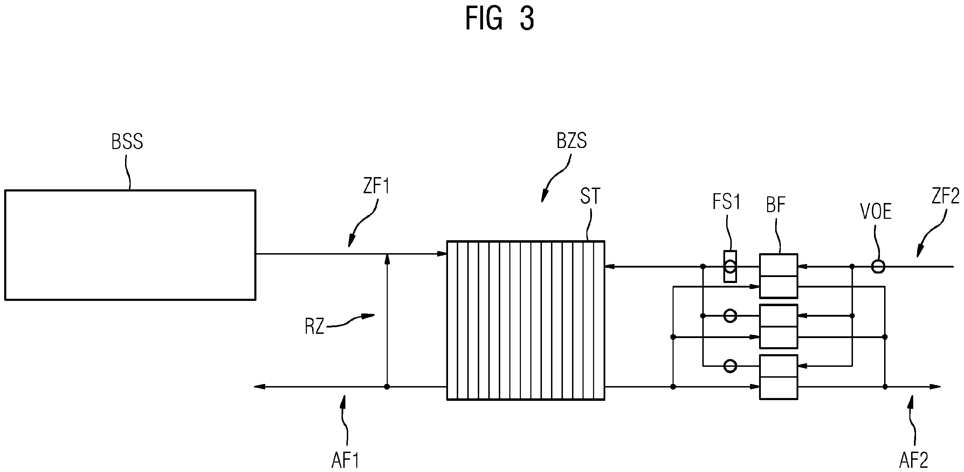

FIG 3 zeigt schematisch ein Beispiel eines alternativen Brennstoffzellensystems BZS, welches entsprechend dem Beispiel der FIG 2 ausgestaltet ist, das erfindungsgemäße Verfahren umzusetzen. In diesem alternativen Brennstoffzellensystem BZS sind anstelle eines einzigen Befeuchters BF, wie er in dem Beispiel der FIG 2 angegeben ist, drei Befeuchter BF in der zweiten Zuführung ZF2 und der zweiten Abführung AF2 angeordnet, um eine höhere Befeuchtungsleistung zu erzielen. Abhängig von der gewünschten Befeuchtungsleistung sowie der Dimensionierung der Befeuchter, welche insbesondere von den Platzverhältnissen in dem Brennstoffzellencontainer BZC abhängen, kann ebenso eine andere Anzahl Befeuchter BF vorgesehen sein. Die beispielhaft angegebenen drei Befeuchter BF sind dabei parallelgeschaltet, wobei sowohl der Luftstrom in der zweiten Zuführung ZF2 als auch das Kathodenabgas in der zweiten Abführung AF2 jeweils stromaufwärts der Befeuchter BF in drei Teilströme aufgeteilt werden und die jeweiligen Teilströme stromabwärts der Befeuchter BF wieder zu einem gemeinsamen Strom zusammengeführt werden.

Um die jeweilige Befeuchtungsleistung der drei Befeuchter BF bestimmen zu können, ist stromabwärts des jeweiligen Befeuchters BF und vor der Zusammenführung der Teilströme wiederum eine verschließbare Öffnung VOE in dem Teilzweig der zweiten Zuführung ZF2 für die Montage eines ersten Feuchtesensors FS1 vorgesehen. Wie vorstehend beschrieben, können wiederum weitere verschließbare Öffnungen für die Montage eines zweiten Feuchtesensors FS2 sowie eines Temperatursensors vorgesehen sein, wobei diese weiteren Öffnungen in der zweiten Zuführung ZF2, außerhalb der Teilzweige für die drei Befeuchter BF, angeordnet sind.

Nach dem Beispiel der FIG 3 wird nur ein erster Feuchtesensor FS1 verwendet, um sequenziell eine jeweilige Befeuchtungsleistung der drei Befeuchter BF zu bestimmen. Hierfür montiert das Wartungspersonal den ersten Feuchtesensor FS1 nacheinander an der verschließbaren Öffnung VOE des Teilzweigs stromabwärts eines der drei Befeuchter BF und belässt diesen dort während des vorgegebenen Zeitraums für die Messungen der Feuchte. Hierdurch kann die Befeuchtungsleistung und damit der Zustand jedes der drei Befeuchter BF bestimmt werden, sodass hierauf basierend gegebenenfalls unterschiedliche Maßnahmen insbesondere hinsichtlich einer Reinigung oder eines Austausches durch das Wartungspersonal getroffen werden können. Alternativ können ebenso drei erste Feuchtesensoren FS1 eingesetzt werden, um eine parallele und damit schnellere Bestimmung des Zustands der Befeuchter zu ermöglichen. Nach dem Beispiel der FIG 3 erfolgt die Zustandsbestimmung der Befeuchter BF ohne Montage eines zweiten Feuchtesensors FS2 an der vorgesehenen verschließbaren Öffnung VOE. Während des Betriebs des Brennstoffzellensystems BZS wird der Rezirkulationszweig zwischen der zweiten Abführung AF2 und der zweiten Zuführung ZF2 mittels eines in dem Zweig angeordneten Ventils verschlossen, sodass das Kathodenabgas vollständig der Umgebung zugeführt wird und folglich die zugeführte Luft nicht mit Kathodenabgas stromaufwärts der Befeuchter BF vermischt wird.

## Patentansprüche

1. Verfahren zum Betreiben eines Brennstoffzellensystems (BZS) in einem Schienenfahrzeug (TZ),
wobei das Brennstoffzellensystem (BZS) zumindest aufweist:
- einen PEM-Brennstoffzellenstapel (ST),
- eine erste Zuführung (ZF1), welche dazu ausgestaltet ist, Wasserstoff als Brenngas einer Anodenseite des Brennstoffzellenstapels (ST) zuzuführen,
- eine zweite Zuführung (ZF2), welche dazu ausgestaltet ist, Luft als Oxidationsgas einer Kathodenseite des Brennstoffzellenstapels (ST) zuzuführen, und
- zumindest einen Befeuchter (BF), welcher in der zweiten Zuführung (ZF2) angeordnet ist und dazu ausgestaltet ist, dem Brennstoffzellenstapel (ST) zugeführte Luft zu befeuchten, und wobei
- eine Reinigung und/oder ein Austausch des zumindest einen Befeuchters (BF) abhängig von einem vorgegebenen Alterungsmodell durchgeführt wird, wobei
das Alterungsmodell abhängig von Betriebsbedingungen des Schienenfahrzeugs (TZ) definiert wird.

2. Verfahren nach Anspruch 1, wobei
das Brennstoffzellensystem (BZS) ferner aufweist:
- zumindest einen Feuchtesensor (FS1), welcher ausschließlich temporär in der zweiten Zuführung (ZF2) stromabwärts des zumindest einen Befeuchters (BF) angeordnet wird, wobei mittels des zumindest einen Feuchtesensors (FS1) eine Feuchte der dem Brennstoffzellenstapel (ST) zugeführten Luft bestimmt wird.

3. Verfahren nach einem der vorstehenden Ansprüche, wobei das Brennstoffzellensystem (BZS) ferner aufweist:
- eine erste Abführung (AF1), welche ausgestaltet ist, ein Anodenabgas abzuführen, und
- eine zweite Abführung (AF2), welche ausgestaltet ist, ein Kathodenabgas abzuführen, wobei der zumindest eine Befeuchter (BF) in der zweiten Abführung (AF2) angeordnet ist, wobei
- in dem zumindest einen Befeuchter (BF) die zugeführte Luft mittels des Kathodenabgases befeuchtet wird.

4. Verfahren nach Anspruch 1, wobei
das Alterungsmodell abhängig von Umgebungs- und Umweltbedingungen einer von dem Schienenfahrzeug (TZ) befahrenen Strecke definiert wird.

## Claims

1. Method for operating a fuel cell system (BZS) in a rail vehicle (TZ),
wherein the fuel cell system (BZS) has at least:
- a PEM fuel cell stack (ST),
- a first feed (ZF1) which is designed to supply hydrogen as fuel gas to an anode side of the fuel cell stack (ST),
- a second feed (ZF2) which is designed to supply air as oxidation gas to a cathode side of the fuel cell stack (ST), and
- at least one humidifier (BF), which is arranged in the second feed (ZF2) and is designed to humidify air supplied to the fuel cell stack (ST) and wherein
- a cleaning and/or replacement of the at least one humidifier (BF) is carried out as a function of a predetermined ageing model, wherein the ageing model is defined as a function of operating conditions of the rail vehicle (TZ).

2. Method according to claim 1, wherein
the fuel cell system (BZS) further has:
- at least one humidity sensor (FS1), which is arranged exclusively temporarily in the second feed (ZF2) downstream of the at least one humidifier (BF), wherein a humidity of the air supplied to the fuel cell stack (ST) is determined by means of the at least one humidity sensor (FS1).

3. Method according to one of the preceding claims, wherein the fuel cell system (BZS) further has:
- a first discharge (AF1), which is designed to discharge an anode discharge gas, and
- a second discharge (AF2), which is designed to discharge a cathode discharge gas, wherein the at least one humidifier (BF) is arranged in the second discharge (AF2),
wherein
- in the at least one humidifier (BF) the supplied air is humidified by means of the cathode gas.

4. Method according to claim 1, wherein
the ageing model is defined as a function of the ambient and environmental conditions of a route travelled by the rail vehicle (TZ).

## Revendications

1. Procédé pour faire fonctionner un système (BZS) de piles à combustible dans un véhicule (TZ) ferroviaire,
dans lequel le système (BZS) de piles à combustible comporte au moins :
- un empilement (ST) de piles à combustible PEM,
- une première arrivée (ZF1), qui est conformée pour apporter de l'hydrogène comme gaz combustible à un côté anodique de l'empilement (ST) de piles à combustible,
- une deuxième arrivée (ZF2), qui est conformée pour apporter de l'air comme gaz d'oxydation à un côté cathodique de l'empilement (ST) de piles à combustible, et
- au moins un humidificateur (BF), qui est monté dans la deuxième arrivée (ZF2) et qui est conformée pour humidifier l'air apporté à l'empilement (ST) de piles à combustible,
et dans lequel
- on effectue un nettoyage et/ou un échange du au moins un humidificateur (BF) en fonction d'un modèle de vieillissement donné à l'avance, dans lequel
on définit le modèle de vieillissement en fonction des conditions de fonctionnement du véhicule (TZ) ferroviaire.

2. Procédé suivant la revendication 1, dans lequel le système (BZS) de piles à combustible comporte en outre :
- au moins un capteur (FS1) d'humidité, qui est monté exclusivement temporairement dans la deuxième arrivée (ZF2) en aval du au moins un humidificateur (BF), dans lequel, au moyen du au moins un capteur (FS1) d'humidité, on détermine une humidité de l'air apporté à l'empilement (ST) de piles à combustible.

3. Procédé suivant l'une des revendications précédentes, dans lequel le système (BZS) de piles à combustible comporte en outre :
- une première évacuation (AF1), qui est conformée pour évacuer un gaz d'échappement anodique, et
- une deuxième évacuation (AF2), qui est conformée pour évacuer un gaz d'échappement cathodique, dans lequel le au moins un humidificateur (BF) est monté dans la deuxième évacuation (AF2), dans lequel
- dans le au moins un humidificateur (BF), on humidifie, au moyen du gaz d'échappement cathodique, l'air apporté.

4. Procédé suivant la revendication 1, dans lequel on définit le modèle de vieillissement en fonction des conditions d'environnement et ambiantes d'une section empruntée par le véhicule (TZ) ferroviaire.
